# EUROPEAN PATENT SPECIFICATION

(11) **EP 0 981 742 B1**
(45) Date of publication and mention of the grant of the patent: **20.06.2007**
(21) Application number: 98928260.3
(22) Date of filing: 12.05.1998
(51) Int. Cl.: G01N 33/00

(54) **Method and sensor system for determining a concentration of a chemical species**
Verfahren und Vorrichtung zur Konzentrationsmessung eines chemischen Stoffes
Procédé et système de capteur pour déterminer une concentration d'une espèce chimique

(30) Priority: 12.05.1997 FR 9705762
(43) Date of publication of application: 01.03.2000
(73) Proprietor: Freescale Semiconductor, Inc., Austin, Texas 78735 (US)
(72) Inventor: BENDHIA, Karim, F-31200, Toulouse (FR); MNIF, Kais, F-31200 Toulouse (FR); PATISSIER, Bruno, F-31270 Villeneuve, Tolosane (FR); PEYRE LAVIGNE, André, F-31120 Lacroix Falgarde (FR); SUEBE, Alain, F-31830 Plaisance du Touch (FR)
(74) Representative: Wharmby, Martin Angus
(86) International application number: PCT/EP1998/002834
(87) International publication number: WO 1998/052036

(56) References cited:
- EP-A- 0 092 068
- WO-A-83/02668
- FR-A- 2 263 513
- FR-A- 2 284 881
- US-A- 4 703 646
- US-A- 4 896 143
- US-A- 5 517 182
- E. W. WILLIAMS: "NOVEL ROOM TEMPERATURE CARBON MONOXIDE SENSOR UTILIZING RATE OF CHANGE OF RESISTANCE IN THICK FILMS OF TIN OXIDE" INTERNATIONAL JOURNAL OF ELECTRONICS, vol. 76, no. 5, May 1994, pages 815-820, XP000459673 LONDON, GB

## Description

### Field of the Invention

This invention relates to a method for determining a concentration of a chemical species and a sensor system for determining a concentration of a chemical species.

### Background of the Invention

Chemical sensors are used to monitor the concentration of specific chemical species which may be in liquid or gaseous form. Generally, chemical sensors comprise a sensitive layer for detecting a specific chemical species and a heater for heating the sensitive layer. A problem with such chemical sensors is that humidity can interfere with the response of the sensor which can lead to inaccurate sensor readings. For example, in a carbon monoxide fire alarm comprising a carbon monoxide chemical sensor having a metal oxide sensitive layer, the effects of humidity can cause a false alarm or no alarm in error.

Humidity is always present in the atmosphere and can vary from one place to another and from day to day. Thus, in order to avoid false alarms due to humidity, it is desirable that the sensor response be corrected to account for humidity.

One possible solution would be to use a dedicated humidity sensor in addition to the chemical sensor. An algorithm must then be used to subtract the humidity signal from the chemical sensor response. Such a solution has a number of disadvantages. Since two separate sensors are used, their output signals must be synchronised and stable before a correction can be made. This increases the complexity of the system and increases the chance for errors and also requires that the effect of the humidity level be stored on a regular basis. In addition, this solution requires two sensors which requires more space than one sensor.

Another solution, which is used in US Patent No. 5,517,182, uses one sensor which comprises a sensitive layer for sensing carbon monoxide and a heater for heating the sensitive layer sequentially to two different temperatures by way of a pulsed signal applied to the heater. The response of the sensor is measured during the period when the sensitive layer is at the lower temperature and the dynamic response is then de-convoluted to account for humidity.

Since the de-convolution of the sensor's response cannot discriminate properly the signal due to humidity, this solution does not sufficiently compensate for humidity.

US patent specification 4 896 143 also discloses a method for determining a concentration of a chemical species in the presence of a contaminant, such as humidity, in which the resistance of a sensor is measured at a lower temperature and again at a higher temperature, with the intention of cancelling the effects of humidity and ambient temperature. French patent specification 2 263 513 also discloses a method of this type. However, the methods disclosed still do not sufficiently compensate for humidity nor for variations of the sensor's characteristics, due to ageing, for example.
The article "Novel room temperature carbon monoxide sensor utilizing rate of change of resistance in thick films of tin oxide" by E. W. Williams, et al. in International Journal of Electronics 1994, vol. 76, at pages 815 to 820 discloses a method for determining a concentration of a chemical species in which the rate of change of the resistance of a sensor is measured, with a view to reducing sensitivity to changes in atmospheric conditions or interferences. However, the measurement of rate of change described in this article still does not provide a stable measurement of the concentration of the chemical species with sufficient compensation for humidity nor for variations of the sensor's characteristics, due to ageing, for example.

There is a need for an improved method and sensor system for determining a concentration of a chemical species with improved humidity compensation.

### Summary of the Invention

The present invention provides a method and sensor system for determining a concentration of a chemical species in the presence of a contaminant as described in the accompanying claims.

### Brief Description of the Drawings

A method and a sensor system for determining the concentration of a chemical species in accordance with the present invention will now be described, by way of example only, with reference to the accompanying drawings in which:
FIG. 1 is a block schematic diagram of a sensor system in accordance with the present invention;
FIG. 2 is a graphical representation of a preferred pulse voltage signal for heating the chemical sensor of the sensor system of FIG. 1;
FIG. 3 is a graphical representation of the response of the chemical sensor of the sensor system of FIG. 1 over a heating cycle;
FIG. 4 is a graphical representation of the time derivative of the chemical sensor response during a first period of the heating cycle;
FIG. 5 is a graphical representation of the time derivative of the chemical sensor response during a second period of the heating cycle; and
FIG. 6 is a graphical representation of the time derivative of the chemical sensor response during a second period for different concentrations of carbon monoxide.

### Detailed Description of the Drawings

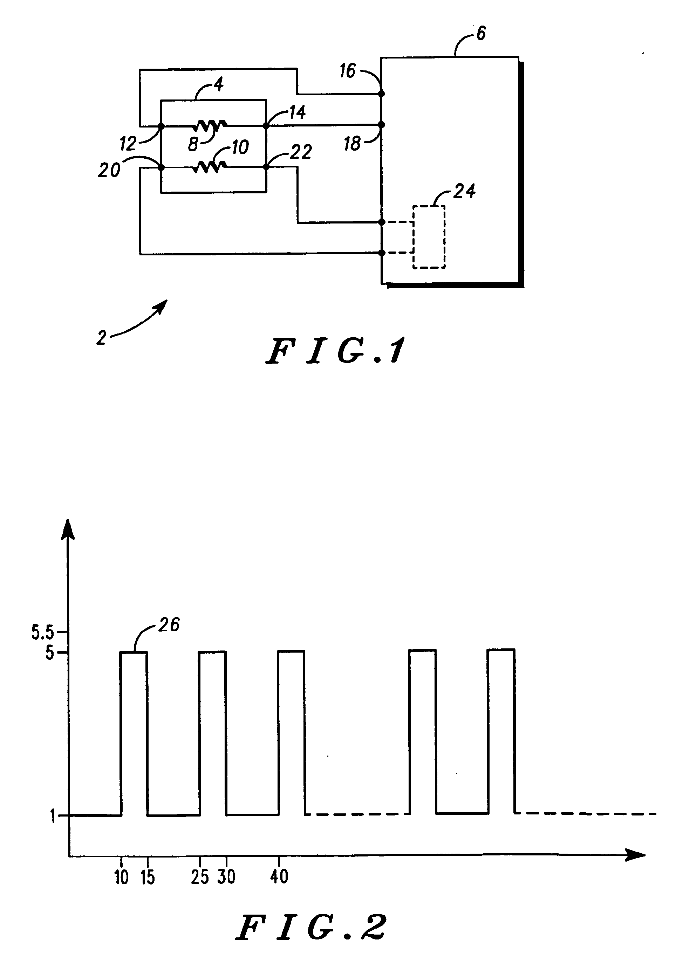

Referring firstly to FIG. 1, a sensor system 2 in accordance with a preferred embodiment of the present invention comprises a chemical sensor 4 and a processing unit 6. The chemical sensor 4 comprises a sensitive layer, represented in FIG. 1 by resistance 8, and a heater, represented by resistance 10, for heating the sensitive layer. Contacts 12, 14 to the sensitive layer are coupled to inputs 16, 18 of the processing unit 6. Contacts 20, 22 to the heater are also coupled to the processing unit 6 for receiving a voltage signal generated by a signal supply circuitry 24 in the processing unit 6.

In the preferred embodiment described below, the chemical sensor 4 is a carbon monoxide chemical sensor having a metal oxide sensitive layer. The present invention may however be applied to different types of chemical sensors having sensitive layers formed of material other than a metal oxide material.

The value of the resistance 8 of the sensitive layer varies according to the concentration of the species to be detected by the chemical sensor 4 and with temperature. Thus, the processing unit 6 monitors the resistance of the sensitive layer across contacts 12 and 14 in order to determine the response of the sensitive layer and hence the concentration of the chemical species.

The signal supply circuitry 24 provides a pulsed voltage signal to the heater of the chemical sensor 4 so that the heater heats the sensitive layer to a first temperature during a first period and to a second temperature during a second consecutive period, the second temperature being greater than the first.

The inventors have recognised that during the first period, the chemical sensor response is a function of the concentration of the chemical species to be detected by the chemical sensor, which in the preferred embodiment is carbon monoxide, and the humidity level in the surrounding environment, whilst during the second period by arranging for the second temperature to reach an optimum value, the chemical sensor response is a function of the humidity level only. In other words, by selecting appropriate values for the heating cycle during the second period, the chemical sensor response is substantially constant with respect to changes in the concentration of carbon monoxide.

In the preferred embodiment, the optimum value is in the range of 380°C to 450°C. For a NO2 sensor, the optimum value will be in the range of 250°C to 320°C. The temperature is determined by the level of the voltage signal applied to the heater and its duration (i.e. the duration of the second period). The level of the voltage signal for the second period, and hence the value of the second temperature, is preferably determined by analysing the sensor's response over various voltage levels for a given concentration of carbon monoxide and by selecting the voltage level at which the sensor response is a maximum, that is, the voltage level at which the sensor is the most sensitive.

In the preferred embodiment, each heating cycle of the pulse voltage signal 26 (shown in FIG. 2) comprises a 1 volt pulse for a period of 10 seconds followed by a 5 volt pulse for a period of 5 seconds. Thus, in the preferred embodiment the first period is 10 seconds and the second period is 5 seconds. It will of course be appreciated that other heating cycles may also be used.

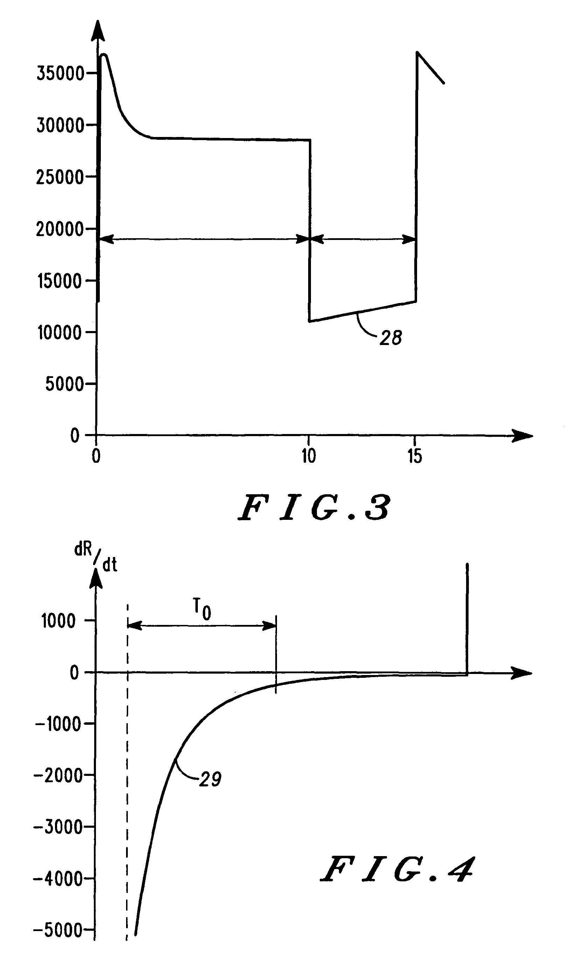

The value of the resistance 8 of the sensitive layer, and hence the response of the chemical sensor 4, varies over the first period and second periods of the heating cycle as shown by the curve 28 in FIG. 3. Since during the first period or cold period, the heater heats the sensitive layer to the first temperature which is lower than the second temperature during the second period or hot period, the resistance of the sensitive layer is higher in the first period than during the second period.

Thus, the method and sensor system for determining a concentration of a chemical species in accordance with the present invention measures the sensor response during both the first cold period and the second hot period and then processes both the measured responses to determine the actual concentration of the carbon monoxide for which humidity has been compensated.

Although the absolute values of the sensor response during the first and second periods could be used in order to determine the actual carbon monoxide concentration, in the preferred embodiment, the time derivative of the measured sensor response during both the first period and the second period is determined and then processed in order to determine the actual concentration. An advantage of processing time derivatives rather than absolute values is that variations in the resistance of the sensitive layer, which can occur for example due to the natural ageing of the metal oxide, do not affect the determined actual concentration of carbon monoxide. With the continuous drift of the sensitive layer's resistance, if the absolute humidity is compensated for as opposed to relative humidity, the sensor system may induce false alarms.

The processing of the measured sensor responses and the calculation of the time derivatives in the first and second periods and their subsequent processing may be carried out by the processing unit 6 or dedicated units (not specifically shown in FIG. 1) in the processing unit or discrete units (not shown). The processing unit 6 may for example comprise a microcontroller such as a HC05 microcontroller supplied by Motorola, Inc.

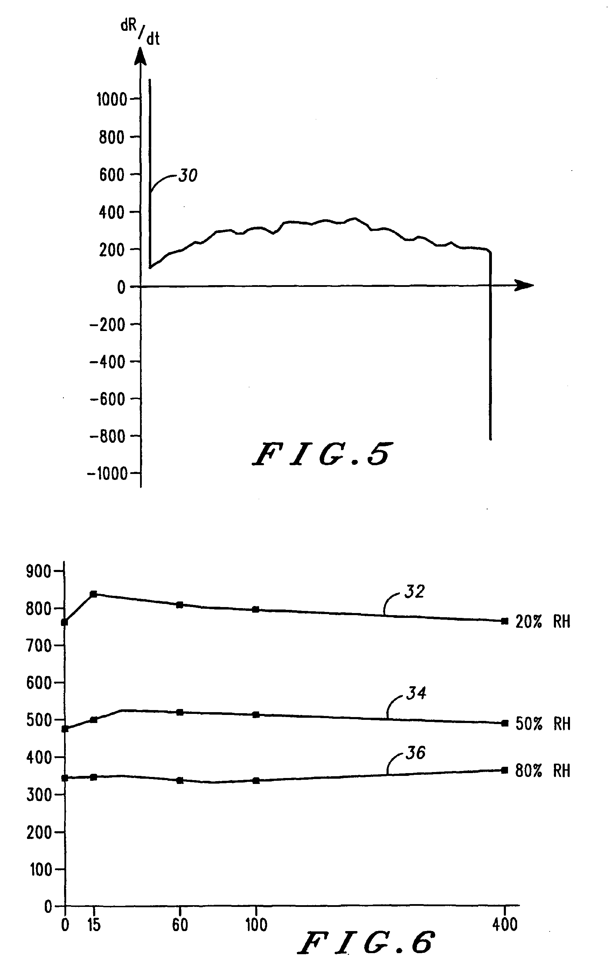

FIG. 4 shows a smoothed curve 29 representing the time derivative of the sensor response (dR/dt) during the first period after filtering. The time for the derivative of the sensor response to stabilise is the time constant To of the derivative during the first period. The time constant To is dependent on the carbon monoxide concentration and the humidity level and can be determined by monitoring the derivative during the first period.

In the preferred embodiment, the time constant is measured by sampling the time derivative of the sensor's response and by determining (via for example a counter) when x sampled points lie within a predetermined threshold window. x is chosen to allow the time derivative to stabilise.

FIG. 5 shows a smoothed curve 30 representing the time derivative of the sensor response (dR/dt) during the second period after filtering. As can be seen from the curve 30 in FIG. 5, the time derivative of the sensor response or resistance of the sensitive layer does not vary much during the second period. In fact, from experiments, the inventors found that the time derivative of the sensor response during the second period was substantially constant for different concentrations of carbon monoxide (see curves 32, 34, 36 in FIG. 6). As can be seen from FIG. 6, the time derivative decreases as the humidity level increases.

The method for determining the concentration of carbon monoxide in accordance with the preferred embodiment of the present invention will now be described with reference to FIG.s 1-6.

Initially a calibration process is performed to determine the time constant To of the derivative of the sensor's response during the first period for different known concentrations of carbon monoxide and different known levels of humidity. From this calibration process, first data, such as the look-up shown in Table 1 below, can be produced which holds the determined time constants To for the different carbon monoxide concentrations and for the different humidity levels.

**Table 1**

| | | Percentage of Humidity | | |
|---|---|---|---|---|
| | | 20% | 50% | 80% |
| Carbon Monoxide Concentration | 0ppm | >10.0s | 10.0s | 7.0s |
| | 15ppm | 10.0s | 7.5s | 5.5s |
| | 60ppm | 7.2s | 4.2s | 4.2s |
| | 100ppm | 6.0s | 3.2s | 2.2s |

At the same time as table 1 is being produced, the value of the derivative of the sensor's response during the second period is determined for the different known concentrations of carbon monoxide and the different known levels of humidity so as to collect second data for the values of the derivative for different humidity levels. The curves 32-36 of FIG. 6 may be produced from this second data.

Preferably, for each concentration of carbon monoxide and for each level of humidity, the time constant To during the first period of a heating cycle and the value of the derivative in the second period of the heating cycle is measured over three heating cycles and the average values stored. Measuring over three cycles improves data reliability. However, it is possible to use the values after one heating cycle only.

The calibration may be performed for each chemical sensor device. However, this can be extremely time consuming. For chemical sensors integrated on a semiconductor substrate, the first and second data will be substantially the same for the same family of sensors which means that calibration need only be performed once for each family. Thus, sensor calibration is preferably performed once for each class of sensors having similar sensing resistances.

Once the calibration has been performed the first and second data is held in the processing unit 6.

In normal operation of the sensor system 2, the pulsed signal 26 is applied to the heater and the derivative of the sensor's response during a first period of the heating cycle is determined and the time constant of the determined derivative is measured. The derivative of the sensor's response during a second period of a heating cycle is determined and the value of the derivative is measured. From the measured value and using the second data held in the processing unit, the actual level of humidity can be determined. The determined level of humidity and the measured time constant is then compared with the first data in order to determine the actual concentration of carbon monoxide.

Preferably, the measured value of the derivative in the second period of a previous heating cycle is used with the time constant of the derivative in the first period of the next heating cycle. In other words, the first measurements are taken in the second period (or hot period) and then in the first period (or cold period) of the next heating cycle.

In the preferred embodiment this comparison step comprises using the determined level of humidity to select one of the columns in the prestored look-up table, table 1, and then by reading off the concentration of carbon monoxide for the measured time constant in the selected column, the actual concentration of carbon monoxide can be determined.

Preferably, in normal operation the time constant To during the first period of a heating cycle and the value of the derivative in the second period of a heating cycle is measured over three heating cycles and the average values determined and used for determining the actual concentration of carbon monoxide.

The present invention therefore provides a method and sensor system which discriminates and measures properly the humidity and actual carbon monoxide (or other chemical species depending on the type of chemical sensor) concentration.

Furthermore, the present invention determines the actual concentration of the carbon monoxide which has been properly compensated to account for humidity without the need for an additional dedicated humidity sensor. Moreover, as the humidity signal (derivative in the second period) is synchronous with the carbon monoxide signal (derivative in the first period), it is not necessary to store the history of the sensor response in real-time in order to determine the actual concentration of the carbon monoxide.

The preferred embodiment utilises derivative curves to determine the actual concentration of carbon monoxide. This has an advantage in that no errors are introduced due to drift of the resistance of the sensitive layer.

Although the invention has been described with respect to compensating for humidity, the present invention may compensate for other contaminants, in addition or instead of humidity.

## Claims

1. A method for determining a concentration of a chemical species in the presence of a contaminant using a chemical sensor (4) having a sensitive layer (8) for detecting the chemical species and a heater (10) for heating the sensitive layer, the method comprising the steps of:
providing a pulsed signal (26) to the heater (10) comprising a series of heating cycles wherein for each heating cycle the heater heats the sensitive layer (8) to a first temperature during a first period and to a second temperature during a second subsequent period, the second temperature being greater than the first temperature;
measuring the response of the sensitive layer during said first and said second period;
**characterised by** generating a first time derivative (29) of the measured response during said first period, generating a second time derivative (30) of the measured response during said second period, the second time derivative being a function of the concentration of said contaminant and being substantially independent of changes in concentration of the chemical species, and generating a parameter (T₀) related to the rate of change with time of said first time derivative (29) during said first period; and
processing said parameter (T₀) and said second time derivative (30) to determine the concentration of the chemical species substantially independently of the presence of said contaminant.

2. A method according to claim 1 further comprising the steps of:
performing a calibration process for different known concentrations of the chemical species and levels of the contaminant comprising the steps of:
providing the pulsed signal (26) to the heater;
measuring the response of the sensitive layer (8) during a third and a fourth period corresponding respectively to said first and second periods for each known concentration of the chemical species and level of the contaminant; and
storing values related to said parameter (T₀) for the calibration responses during the third period and the corresponding known concentrations of the chemical species and levels of contaminant as first data and storing values related to said second time derivative (30) for the calibration responses and corresponding known levels of contaminant during the fourth period as second data, and calibration responses and corresponding known levels of contaminant during the fourth period as second data, and
wherein said processing step comprises comparing values related to said parameter (T₀) and said second time derivative (30) for the measured responses for the first and second period with the first and second data respectively so as to determine the concentration of the chemical species.

3. A method according to claim 1 or 2 wherein generating said parameter (T₀) related to the rate of change with time of said first time derivative comprises measuring a time constant of the first time derivative.

4. A method according to any preceding claim wherein said pulsed signal (26) comprises a series of heating cycles, each heating cycle comprising a pulse having a first voltage level and a duration of the first period and a consecutive pulse having a second voltage level and a duration of the second period, the second voltage level being greater than the first voltage level and the first period being greater than the second period.

5. A method according to any preceding claim wherein the contaminant is humidity.

6. A sensor system for determining a concentration of a chemical species in the presence of a contaminant, the sensor system comprising:
a chemical sensor (4) having a sensitive layer (8) for detecting the chemical species and a heater (10) for heating the sensitive layer (8);
a signal supply circuitry (24) for providing a pulsed signal (26) to the heater (10) comprising a series of heating cycles, each heating cycle for heating the sensitive layer to a first temperature during a first period and to a second temperature during a second subsequent period, the second temperature being greater than the first temperature;
measuring means for measuring the response of the sensitive layer during the first and second period; and
processing means for processing the measured response for the first and second period to determine the concentration of the chemical species;
**characterised in that** said processing means comprises
generating means arranged to generate the following values:
a first time derivative (29) of the measured response during said first period,
a second time derivative (30) of the measured response during said second period, the second time derivative being a function of the concentration of said contaminant and being substantially independent of changes in concentration of the chemical species, and
a parameter (T₀) related to the rate of change with time of said first time derivative (29) during said first period; and
means for processing said parameter (T₀) and said second time derivative (30) to determine the concentration of the chemical species substantially independently of the presence of said contaminant.

7. A sensor system according to claim 6 wherein said means for generating said parameter (T₀) related to the rate of change with time of said first time derivative includes means for measuring a time constant of the first time derivative.

8. A sensor system according to claim 6 or 7 wherein said sensitive layer (8) comprises a metal oxide material.

9. A sensor system according to any of claims 6 to 8 wherein said signal supply circuitry (24) is arranged to supply said pulsed signal in:
a series of heating cycles, each heating cycle comprising a pulse having a first voltage level and a duration of the first period and a consecutive pulse having a second voltage level and a duration of the second period, the second voltage level being greater than the first voltage level and the first period being greater than the second period; and
a cleaning cycle after a predetermined number of heating cycles, the cleaning cycle comprising a pulse having a third voltage level and a duration of a third period, the third voltage level being greater than the second voltage level and the third period being greater than the first period.

## Patentansprüche

1. Verfahren zur Bestimmung der Konzentration einer chemischen Substanz in Anwesenheit einer verunreinigenden Substanz unter Verwendung eines chemischen Sensors (4) mit einer sensitiven Schicht (8) zur Erfassung der chemischen Substanz und einer Heizvorrichtung (10) zum Erwärmen der sensitiven Schicht, wobei das Verfahren die folgenden Schritte umfasst:
Anlegen eines Impulssignals (26) an die Heizvorrichtung (10), das eine Folge von Heizzyklen umfasst, wobei die Heizvorrichtung die sensitive Schicht (8) in jedem Heizzyklus während einer ersten Periode auf eine erste Temperatur und während einer zweiten, nachfolgenden Periode auf eine zweite Temperatur erwärmt und die zweite Temperatur höher als die erste Temperatur ist; und
Messen des Ansprechverhaltens der sensitiven Schicht während der ersten und der zweiten Periode;
**gekennzeichnet durch** die Erzeugung einer ersten zeitlichen Ableitung (29) des gemessenen Ansprechverhaltens während der ersten Periode, die Erzeugung einer zweiten zeitlichen Ableitung (30) des gemessenen Ansprechverhaltens während der zweiten Periode, wobei die zweite zeitliche Ableitung eine Funktion der Konzentration der verunreinigenden Substanz und im Wesentlichen unabhängig von Veränderungen der Konzentration der chemischen Substanz ist, und die Erzeugung eines Parameters (T₀), der die zeitabhängige Veränderungsrate der ersten zeitlichen Ableitung (29) während der ersten Periode betrifft; und
die Verarbeitung des Parameters (T₀) und der zweiten zeitlichen Ableitung (30) zur im Wesentlichen vom Vorhandensein der verunreinigenden Substanz unabhängigen Bestimmung der Konzentration der chemischen Substanz.

2. Verfahren nach Anspruch 1, das weiterhin die folgenden Schritte umfasst:
Ausführen eines Kalibrierungsprozesses für unterschiedliche bekannte Konzentrationen der chemischen Substanz und Pegel der verunreinigenden Substanz, der die folgenden Schritte umfasst:
Anlegen des Impulssignals (26) an die Heizvorrichtung;
Messen des Ansprechverhaltens der sensitiven Schicht (8) während einer dritten und einer vierten Periode, die jeweils der ersten und der zweiten Periode entsprechen, für jede bekannte Konzentration der chemischen Substanz und jeden bekannten Pegel der verunreinigenden Substanz; und
Speichern von den Parameter (T₀) betreffenden Werten für die Kalibrierungsansprechverhalten während der dritten Periode und der entsprechenden bekannten Konzentrationen der chemischen Substanz und der Pegel der verunreinigenden Substanz als erste Daten und Speichern von die zweite zeitliche Ableitung (30) betreffenden Werten für die Kalibrierungsansprechverhalten und der entsprechenden bekannten Pegel der verunreinigenden Substanz während der vierten Periode als zweite Daten, und
wobei der Verarbeitungsschritt das jeweilige Vergleichen von den Parameter (T₀) und die zweite zeitliche Ableitung (30) für die gemessenen Ansprechverhalten für die erste und die zweite Periode betreffenden Werten mit den ersten und zweiten Daten zur Bestimmung der Konzentration der chemischen Substanz umfasst.

3. Verfahren nach Anspruch 1 oder 2, bei dem die Erzeugung des die zeitabhängige Veränderungsrate der ersten zeitlichen Ableitung betreffenden Parameters (T₀) das Messen einer Zeitkonstante der ersten zeitlichen Ableitung umfasst.

4. Verfahren nach einem der vorhergehenden Ansprüche, bei dem das Impulssignal (26) eine Folge von Heizzyklen umfasst, jeder Heizzyklus einen Impuls mit einem ersten Spannungspegel und einer Dauer von der ersten Periode und einen nachfolgenden Impuls mit einem zweiten Spannungspegel und einer Dauer von der zweiten Periode umfasst und der zweite Spannungspegel größer als der erste Spannungspegel und die erste Periode länger als die zweite Periode ist.

5. Verfahren nach einem der vorhergehenden Ansprüche, bei dem die verunreinigende Substanz Feuchtigkeit ist.

6. Sensorsystem zur Bestimmung der Konzentration einer chemischen Substanz in Anwesenheit einer verunreinigenden Substanz, wobei das Sensorsystem folgendes umfasst:
einen chemischen Sensor (4) mit einer sensitiven Schicht (8) zur Erfassung der chemischen Substanz und eine Heizvorrichtung (10) zum Erwärmen der sensitiven Schicht (8);
einen Signalzufuhrschaltkreis (24) zum Anlegen eines Impulssignals (26) an die Heizvorrichtung (10), das eine Folge von Heizzyklen umfasst, wobei jeder Heizzyklus dem Erwärmen der sensitiven Schicht auf eine erste Temperatur während einer ersten Periode und auf eine zweite Temperatur während einer zweiten, nachfolgenden Periode dient und die zweite Temperatur höher als die erste Temperatur ist;
eine Messeinrichtung zum Messen des Ansprechverhaltens der sensitiven Schicht während der ersten und der zweiten Periode; und
eine Verarbeitungseinrichtung zum Verarbeiten des gemessenen Ansprechverhaltens für die erste und die zweite Periode zur Bestimmung der Konzentration der chemischen Substanz;
**dadurch gekennzeichnet, dass** die
Verarbeitungseinrichtung folgendes umfasst:
eine Erzeugungseinrichtung, die so beschaffen ist, dass sie die folgenden Werte erzeugt:
eine erste zeitliche Ableitung (29) des gemessenen Ansprechverhaltens während der ersten Periode,
eine zweite zeitliche Ableitung (30) des gemessenen Ansprechverhaltens während der zweiten Periode, wobei die zweite zeitliche Ableitung eine Funktion der Konzentration der verunreinigenden Substanz und im Wesentlichen unabhängig von Veränderungen der Konzentration der chemischen Substanz ist, und
einen die zeitabhängige Veränderungsrate der ersten zeitlichen Ableitung (29) während der
ersten Periode betreffenden Parameter (T₀); und
eine Einrichtung zum Verarbeiten des Parameters (T₀) und der zweiten zeitlichen Ableitung (30) zur im Wesentlichen vom Vorhandensein der verunreinigenden Substanz unabhängigen Bestimmung der Konzentration der chemischen Substanz.

7. Sensorsystem nach Anspruch 6, bei dem die Einrichtung zur Erzeugung des die zeitabhängige Veränderungsrate der ersten zeitlichen Ableitung betreffenden Parameters (T₀) eine Einrichtung zum Messen einer Zeitkonstante der ersten zeitlichen Ableitung umfasst.

8. Sensorsystem nach Anspruch 6 oder 7, bei dem die sensitive Schicht (8) ein Metalloxidmaterial umfasst.

9. Sensorsystem nach einem der Ansprüche 6 bis 8, bei dem der Signalzufuhrschaltkreis (24) so beschaffen ist, dass er das Impulssignal wie folgt anlegt:
in einer Folge von Heizzyklen, wobei jeder Heizzyklus einen Impuls mit einem ersten Spannungspegel und einer Dauer von der ersten Periode und einen darauf folgenden Impuls mit einem zweiten Spannungspegel und einer Dauer von der zweiten Periode umfasst und der zweite Spannungspegel größer als der erste Spannungspegel und die erste Periode länger als die zweite Periode ist, und
in einem Reinigungszyklus nach einer vorgegebenen Anzahl von Heizzyklen, wobei der Reinigungszyklus einen Impuls mit einem dritten Spannungspegel und einer Dauer von einer dritten Periode umfasst und der dritte Spannungspegel größer als der zweite Spannungspegel und die dritte Periode länger als die erste Periode ist.

## Revendications

1. Procédé pour déterminer une concentration d'une espèce chimique d'un contaminant à l'aide d'un capteur chimique (4) ayant une couche sensible (8) pour détecter l'espèce chimique et un filament (10) pour chauffer la couche sensible, le procédé comprenant les étapes consistant à :
délivrer un signal pulsé (26) au filament (10) comprenant une série de cycles de chauffage dans lesquels, pour chaque cycle de chauffage, le filament chauffe la couche sensible (8) à une première température au cours d'une première période et à une seconde température au cours d'une seconde période subséquente, la seconde température étant supérieure à la première température ;
mesurer la réponse de la couche sensible au cours de ladite première et de ladite seconde période ;
**caractérisé par** la génération d'une première dérivée temporelle (29) de la réponse mesurée au cours de ladite première période, la génération d'une seconde dérivée temporelle (30) de la réponse mesurée au cours de ladite seconde période, la seconde dérivée temporelle étant une fonction de la concentration dudit contaminant et étant sensiblement indépendante des changements de concentration de l'espèce chimique, et la génération d'un paramètre (T0) lié à la vitesse de changement dans le temps de ladite première dérivée temporelle (29) au cours de ladite première période ; et
traiter ledit paramètre (T₀) et ladite seconde dérivée temporelle (30) pour déterminer la concentration de l'espèce chimique sensiblement indépendamment de la présence dudit contaminant.

2. Procédé selon la revendication 1, comprenant en outre les étapes consistant à :
exécuter un processus d'étalonnage pour différentes concentrations connues de l'espèce chimique et niveaux du contaminant comprenant les étapes consistant à :
délivrer le signal pulsé (26) au filament ;
mesurer la réponse de la couche sensible (8) au cours d'une troisième et d'une quatrième périodes correspondant respectivement à ladite première et à ladite seconde période pour chaque concentration connue de l'espèce chimique et niveau du contaminant ; et
stocker des valeurs concernant ledit paramètre (T₀) pour les réponses d'étalonnage au cours de la troisième période et les concentrations connues correspondantes de l'espèce chimique et des niveaux du contaminant comme premières données et stocker les valeurs concernant ladite seconde dérivée temporelle (30) pour les réponses d'étalonnage et les niveaux connus correspondants du contaminant au cours de la quatrième période comme secondes données, et
dans lequel ladite étape de traitement comprend de comparer les valeurs liées audit paramètre (T₀) et ladite seconde dérivée temporelle (30) pour les réponses mesurées pour la première et la seconde période aux premières et secondes données respectivement, de manière à déterminer la concentration de l'espèce chimique.

3. Procédé selon la revendication 1 ou la revendication 2, dans lequel la génération dudit paramètre (T₀) lié à la vitesse de changement avec le temps de ladite première dérivée temporelle comprend de mesurer une constante de temps de la première dérivée temporelle.

4. Procédé selon l'une quelconque des revendications précédentes, dans lequel ledit signal pulsé (26) comprend une série de cycles de chauffage, chaque cycle de chauffage comprenant une impulsion ayant un premier niveau de tension et une durée correspondant à la première période, et une impulsion consécutive ayant un second niveau de tension et une durée correspondant à la seconde période, le second niveau de tension étant supérieur au premier niveau de tension et la première période étant supérieure à la seconde période.

5. Procédé selon l'une quelconque des revendications précédentes, dans lequel le contaminant est de l'humidité.

6. Système de capteur pour déterminer une concentration d'une espèce chimique en présence d'un contaminant, le système de capteur comprenant :
un capteur chimique (4) ayant une couche sensible (8) pour détecter l'espèce chimique et un filament (10) pour chauffer la couche sensible (8) ;
un circuit de délivrance de signal (24) pour délivrer un signal pulsé (26) au filament (10) comprenant une série de cycles de chauffage, chaque cycle de chauffage pour chauffer la couche sensible à une première température au cours d'une première période et à une seconde température au cours d'une seconde période subséquente, la seconde température étant supérieure à la première température ;
un moyen de mesure pour mesurer la réponse de la couche sensible au cours de la première et de la seconde période ; et
un moyen de traitement pour traiter la réponse mesurée pour la première et la seconde période pour déterminer la concentration de l'espèce chimique ;
**caractérisé en ce que** le moyen de traitement comprend :
un moyen de génération arrangé pour générer les valeurs suivantes:
une première dérivée temporelle (29) de la réponse mesurée au cours de ladite première période,
une seconde dérivée temporelle (30) de la réponse mesurée au cours de ladite seconde période, la seconde dérivée temporelle étant une fonction de la concentration dudit contaminant et étant sensiblement indépendante des changements de concentration de l'espèce chimique, et
un paramètre (T₀) lié à la vitesse de changement dans le temps de ladite première dérivée temporelle (29) au cours de ladite première période ; et
un moyen pour traiter ledit paramètre (T₀) et ladite seconde dérivée temporelle (30) pour déterminer la concentration de l'espèce chimique sensiblement indépendamment de la présence dudit contaminant.

7. Système de capteur selon la revendication 6, dans lequel ledit moyen pour générer ledit paramètre (T₀) lié à la vitesse de changement dans le temps de ladite première dérivée temporelle comprend un moyen pour mesurer une constante de temps de la première dérivée temporelle.

8. Système de capteur selon la revendication 6 ou la revendication 7, dans lequel ladite couche sensible (8) comprend un matériau d'oxyde métallique.

9. Système de capteur selon l'une quelconque des revendications 6 à 8, dans lequel ledit circuit de délivrance de signal (24) est arrangé pour délivrer ledit signal pulsé dans :
une série de cycles de chauffage, chaque cycle de chauffage comprenant une impulsion ayant un premier niveau de tension et une durée de la première période et une impulsion consécutive ayant un second niveau de tension et une durée de la seconde période, le second niveau de tension étant supérieur au premier niveau de tension, et la première période étant plus longue que la seconde période ; et
un cycle de nettoyage après un nombre prédéterminé de cycles de chauffage, le cycle de nettoyage comprenant une impulsion ayant un troisième niveau de tension et une durée d'une troisième période, le troisième niveau de tension étant supérieur au second niveau de tension et la troisième période étant plus longue que la première période.
